# EUROPEAN PATENT APPLICATION

(11) **EP 1 063 803 A1**
(43) Date of publication of application: **27.12.2000**
(21) Application number: 00304792.5
(22) Date of filing: 06.06.2000
(51) Int. Cl.: H04J 14/02

(54) **Wideband optical packet ring network**

(30) Priority: 15.06.1999 US 333406
(71) Applicant: LUCENT TECHNOLOGIES INC., Murray Hill, New Jersey 07974-0636 (US)
(72) Inventor: Adams, Laura Ellen, Basking Ridge, New Jersey 07920 (US); Anderson, Jon, Brielle, New Jersey 08730 (US); Brinkman, William Frank, Basking Ridge, New Jersey 07920 (US); Broberg, Robert Mario, San Francisco, California 94110 (US)
(74) Representative: Buckley, Christopher Simon Thirsk

(57) **Abstract**

A dual-ring, bi-directional optical fiber transmission system interconnects a series of add/drop nodes with a hub, such that multiple, widely spaced coarse wavelength division multiplexed (C-WDM) channels are established on each ring. At each node, an optical add/drop module (OADM) includes broadband filters (BBF's), such as dielectric thin film filters, arranged to (a) extract, for the purposes of a receiver, or (b) insert, for the purposes of a transmitter, information in one or more of the channels. The signals in the one or more channels are coupled to the OADM's by a standard optical transceiver, which performs modulation and demodulation. Each filter passband can be populated with multiple dense wavelength division multiplexed (D-WDM) channels, so that the capacity of traffic that can be handled at each node can be easily upgraded. The transceiver is, in turn, coupled to packet framer, such as an IP packet over SONET framer, which supplies received packets to, and receives outgoing packets from, a conventional Layer 3 routing engine. While in most instances, endpoints at each of the nodes communicate with other endpoints connected to the hub, if desired, endpoints at one or more nodes can communicate directly with endpoints on other nodes, using a direct or bypass connection through the hub. The bypass can be "permanent" or controlled via a switch, such as a micro-electro-mechanical switch (MEMS).

## Description

### Field of the Invention

The present invention relates generally to wideband optical networking, and, more particularly, to a coarse wavelength division multiplexing (C-WDM) arrangement in which data packets (such as are used in asynchronous transfer mode (ATM), synchronous transfer mode (STM), internet protocol (IP) networks and/or streaming audio and/or video networks) may be communicated between nodes connected in a ring or loop configuration to form a metropolitan or wide area network.

### Background of the Invention

There exists a need for a data communication system which provides a high degree of protected (i.e., relatively immune to service disruption), high capacity connectivity between remote sites, potentially spanning relatively large distances, at a low cost, and in a manner that enables non-disruptive capacity upgrades on individual links. Conventional optical networking approaches have been insufficient to produce a network with the above-described functionality, and indeed no such network exists today.

In a traditional Synchronous Optical Network/Synchronous Digital Hierarchy (SONET/SDH) ring network, connectivity between nodes can be realized by time division multiplexing (TDM) a single wavelength. Hence, the nodes are interdependent, and increasing the capacity between a pair of nodes requires upgrading every node in the ring. Wavelength Division Multiplexing (WDM), which has been deployed primarily as a point-to-point technology, is becoming attractive for protected ring networks, providing connections between nodes on dedicated wavelengths. In a conventional Dense WDM (D-WDM) ring, the capacity between a pair of nodes may be increased without making changes to other nodes in the ring, for example by adding additional wavelength channels on a given link. However, a multi-wavelength upgrade generally necessitates a temporary disruption to all traffic on the ring, while optical filters are replaced or added to accommodate the new D-WDM channels. D-WDM has other limitations as well. The narrow wavelength spacing requires wavelength- stabilized lasers and complex optical filtering to separate channels, thereby making D-WDM a very expensive technology. Temperature-control requirements and associated power dissipation result in large footprint cooled laser/transceiver components, consuming precious board space. Furthermore, current D-WDM rings are implemented in a manner that results in high loss for channels passing through each node, making optical amplifiers a necessity even for relatively short ring lengths and small node numbers.

Coarse WDM (C-WDM) (sometimes known as wideband WDM) has recently been proposed as a low-cost alternative to D-WDM, taking advantage of uncooled distributed feedback (DFB) lasers and simpler passive components. This new technology is being targeted toward short distance applications (up to 20 km), as many of the C-WDM channels, separated by ∼ 20nm, will lie outside the bandwidth of conventional Erbium-doped fiber amplifiers (EDFA). While no practical implementations of a C-WDM system have been publicly described, recent advances that enable such systems to operate over longer distances are described in several applications filed concurrently with the present application and assigned to the same assignee, specifically, an application filed on behalf of L. Adams, J. Anderson, R. Broberg, D. DiGiovanni and K. Rottwitt entitled "Broadband Amplified WDM Ring", an application filed on behalf of L. Adams, J. Anderson and R. Broberg entitled "Optical Ring Network Having Enhanced Security and Reduced Loss", and an application filed on behalf of L. Adams, J. Anderson, R. Broberg and G. Lenz entitled "Optical Add-Drop Module With Low Loss and High Isolation".

### Summary of the Invention

In accordance with the present invention, a dual-ring, bi-directional optical fiber transmission system interconnects a series of nodes with a hub, such that multiple, widely spaced C-WDM channels are established on each ring. Typically, a relatively wide spacing of the channels, on the order of 20nm, enables the use of very low cost transceivers and avoids the need for temperature control. At each node, an optical add-drop module (OADM) comprises broadband filters (BBF's), such as a dielectric thin film filters (TFF's), arranged to (a) extract, for the purposes of a receiver, or (b) insert, for the purposes of a transmitter, information bearing signals in one or more of the channels. This type of filter is well suited to accommodate the wavelength drift normally associated with temperature changes in uncooled lasers. The nodes that include an OADM are sometimes called an "add-drop" node.

The signals in each C-WDM channel are coupled to the OADM in each add-drop node by a standard optical transceiver, which performs modulation and demodulation. The transceiver is, in turn, coupled to a packet framer which supplies received packets to, and receives outgoing packets from, a conventional packet switch or routing engine, such as a Layer 3 routing engine. The packet framer used in the present invention can be any one of a variety of types, including IP Packet over SONET, ATM, STM or Ethernet, or a framer of the type that is used in audio and/or video networks. For simplicity of description, it will be assumed that an IP Packet over SONET framer is used.

In the present invention, because a dual ring configuration is used for reliability and redundancy, a pair of transceivers each with an associated OADM that includes broadband filters, are deployed at each add/drop node, one for each ring. This arrangement allows both directions of the dual fiber ring to be used to transmit and receive packets at the hub and the add/drop nodes, thereby effectively increasing the capacity of the ring by a factor of two in normal operation. Upon the occurrence of a ring fault, e.g. a fiber cut, cross-over mechanisms at the add/drop nodes and hub are activated to enable packet transmission and reception on the portion of the ring that is unaffected by the fault. Thus, while a ring fault effectively reduces the ring capacity to half of normal operation, operation can nevertheless continue while the fault is being repaired. If desired, when a ring fault condition occurs, priority handling of packets at the packet forwarding engine can be put into effect, to ensure that packets with highest priority are transmitted first on the surviving link.

Because of the advantageous use of broadband filters (such as TFF's) in the arrangement of the present invention, simple lasers can be used in the fiber transmission system. As a result, there is no requirement for thermoelectric coolers or heat sinks, power dissipation is reduced, and the hubs and nodes can be of smaller size than currently available. Additionally, the broadband filters are passive in operation and require no optical-to-electrical conversion. This allows the optical packet ring to remain operational in the instance of an add/drop node failure, such as a power loss. Passive filters also allow the OADM to be moved from the electronic cabinet that houses the pertinent node's transceivers, packet framers, routing engine and related electronics to a remote location, such as fiber duct. [This arrangement is described in the above-cited copending application entitled "Optical Ring Network Having Enhanced Security and Reduced Loss".] Furthermore, each filter passband can be populated with multiple dense wavelength division multiplexed (D-WDM) channels, so that the capacity of traffic that can be handled at each node can be easily upgraded without disrupting service already active on the ring. The architecture of the present invention is thus such that a "pay as you grow" approach can be used, wherein capacity may be upgraded (added) on a node-by-node basis while the system remains in service.

While in most instances, endpoints at each of the nodes communicate with other endpoints connected to the hub, the hub of the present invention can, if desired, be configured to allow for selected C-WDM channel optical by-pass, thereby enabling a direct connection between a given pair of add/drop nodes on the ring. The bypass can be "permanent" or controlled via a switch, for example using micro-electro-mechanical systems (MEMS) technology. This optical by-pass arrangement has the advantage that for certain situations where high-capacity connectivity is required between two selected add/drop nodes on the ring, a connection can be arranged in the hub without affecting other traffic on the ring. With this configuration, the processing load on the hub is advantageously reduced.

### Brief Description of the Drawing

The present invention will be more fully appreciated by consideration of the following detailed description, which should be read in light of the accompanying drawing in which:
Fig. 1 is a block diagram of a dual-ring, bi-directional optical fiber transmission system arranged in accordance with the present invention such that it interconnects a series of nodes with a hub, and such that multiple, widely spaced C-WDM channels are established on each ring;
Fig. 2 is a block diagram showing one of the optical transmission rings, the hub and some of the nodes shown in Fig. 1, but in somewhat more detail;
Fig. 3 is a block diagram showing the arrangement of node 110 of Figs. 1 and 2, but in more detail;
Fig. 4 is a block diagram showing the arrangement of the details of hub 130 of Figs. 1 and 2, which is located on the clockwise ring (and a corresponding hub on the counter-clockwise ring);
Fig. 5 is a block diagram showing the arrangement of the details of the hub 130 of Figs. 1 and 2 for providing optical by-pass;
Fig. 6 is a block diagram illustrating the use of micro-electro-mechanical switches (MEM's) to accomplish optical by-pass in a configuration similar to that of Fig. 5; and
Fig. 7 is a diagram illustrating the relationship between the C-WDM channels established on the optical rings shown in the preceding figures.

### Detailed Description

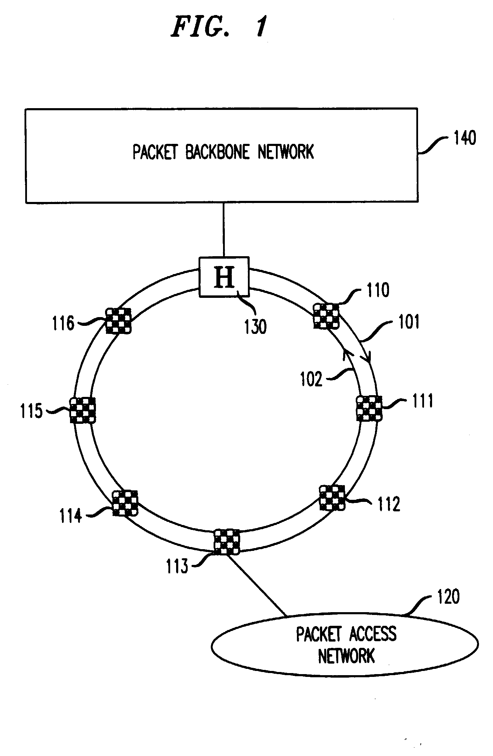

Referring first to Fig. 1, there is shown a block diagram of a dual-ring, bi-directional optical fiber packet transmission system having a first ring 101 transmitting packets in a clockwise direction, and a second ring 102, transmitting packets in a counterclockwise direction. Rings 101 and 102 interconnect a series of add/drop nodes 110-116 with a hub 130, such that multiple, widely spaced C-WDM channels are established on each ring. Hub 130 is connected to a managed packet backbone wide area network (WAN) 140, which can be, for example, an IP network comprising ATM (layer 2) switches and/or IP (Layer 3) routers. The purpose of the transmission system of Fig. 1 is to route packets, typically IP packets using the SONET/SDH interface and protocol, from backbone WAN 140 to destinations that are interconnected to the system via other access networks, such as the packet access network 120 shown coupled to node 113, and vice-versa (i.e., from users connected to access network 120 to backbone network 140). The SONET/SDH protocol is well documented in ANSI Standard T1.105-1996 (SONET) and ITU-T Recommendation G.707-1996 (SDH); packet access network 120 may be a PathStar IP switch available from Lucent Technologies, Inc.

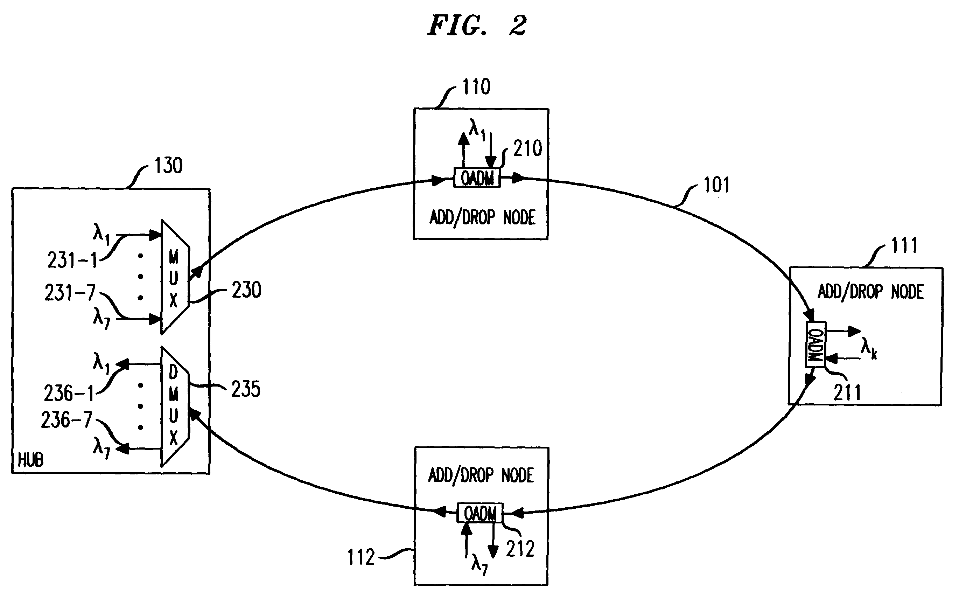

Referring now to Fig. 2, some of the elements shown in Fig. 1 are shown again, but in more detail. In Fig. 2, only one of the optical transmission rings 101 is shown interconnecting three add/drop nodes 110-112 with hub 130. Ring 101 is shown as transmitting packets in the clockwise direction; a similar ring, not shown, interconnects the nodes for packet transmission in the reverse, i.e., counterclockwise, direction. Each of the add/drop nodes 110-112 includes a respective optical add-drop module (OADM) 210-212, arranged to (a) extract from the wavelength division multiplexed signals present on ring 101, only those signals in a specific wavelength band, corresponding to a specific widely spaced C-WDM channel, and (b) insert signals back onto ring 101 in the same specific wavelength band and C-WDM channel. Thus, as seen in Fig. 2, OADM 210 in node 110 is tuned to wavelength λ₁, OADM 211 in node 111 is tuned to wavelength λₖ, and OADM 212 in node 112 is tuned to wavelength λ₇, it being assumed in this example that there are a total of seven WDM channels available on ring 101.

As stated previously, the broadband filters (BBF's) within each of the OADM's contemplated by the present invention can be thin film filters, the details of which can be found in copending application of L. Adams, J. Anderson, R. Broberg and G. Lenz entitled "Optical Add-Drop Module With Low Loss and High Isolation", mentioned above. Alternatively, BBF's can be fused biconically tapered filters such as those available from ITF Optical Technologies (http://www.itfoptical.com) or Gould Fiber Optics (http://fiberoptic.com/gould). Details of such filters can be obtained from Francois Gonthier, Laser Focus World, June 1998, or from FiberTalk, Winter1999, Volume11, Issue41 (published quarterly by Gould Fiber Optics).

Hub 130 in Fig. 2 includes a multiplexer 230 and a demultiplexer 235 connected to the originating and terminating ends of ring 101, respectively. These elements may be part of an optical interface port or line card on a Layer 3 switch/router. In the embodiment illustrated, multiplexer 230 receives packets carried in 7 separate input streams on lines 231-1 to 231-7, where each of the streams represents an individual C-WDM channel λ₁ to λ₇. The individual inputs are combined into a single C-WDM signal and applied to ring 101. Similarly, demultiplexer 235 receives the C-WDM signal on ring 101, separates the combined signal into 7 separate output streams on lines 236-1 to 236-7, and applies the output streams to suitable decoding apparatus.

Considered from an end-to-end perspective, the arrangement of Fig. 2 communicates packets from a source connected to line 231-1 in a C-WDM channel λ₁ to a destination connected to node 110, and returns packets from the destination via a path that includes node 110, node 111, node 112 and hub 130. In hub 130, the packets in C-WDM channel λ₁ are coupled back to the source via line 236-1. Likewise, a source connected to line 231-7 contains packets in a C-WDM channel λ₇ that are routed via nodes 110and 111 to a destination connected to node 112. Return packets from the destination travel via a path that includes node 112 and hub 130. In hub 130, the packets in C-WDM channel λ₇ are coupled back to the source via line 236-7. Fig. 2 illustrates a three (3) node system. As previously noted, the present invention can support additional nodes. In analysis performed by the applicants, an embodiment with up to seven (7) such nodes per ring is contemplated.

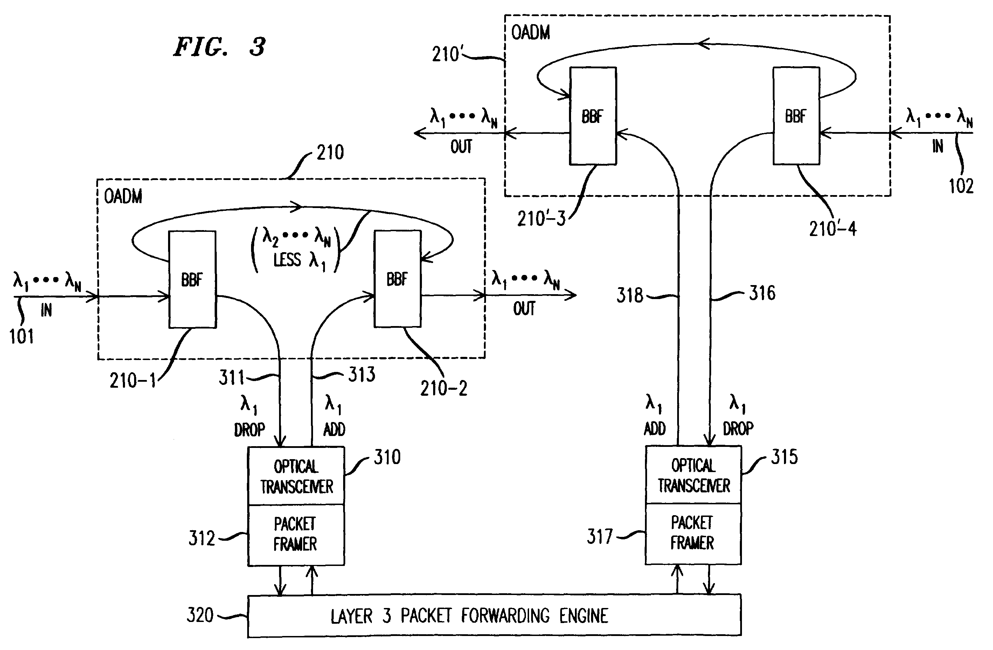

Fig. 3 is a block diagram showing the arrangement of one of the nodes of Figs. 1 and 2, but in more detail. In Fig. 3, ring 101, which circulates packets in a clockwise (left to right in Fig. 3) direction, applies signals in multiple C-WDM channels λ₁ to λ₇ to OADM 210, which is shown in Fig. 3 as having two distinct BBF's, namely an extraction (drop) filter 210-1 and an insertion (add) filter 210-2. The function of TFF drop filter 210-1 is to separate from the combined signals received at the node, only those signals in one of the WDM channels λₖ. These signals are applied, via downstream connection 311, to the receiver portion of a standard optical transceiver 310, which is arranged to demodulate the information portion of the packets from the carrier portion, and apply the information packets to a packet framer 312 (such as a TDAT STS-1/12c packet framer), which implements, for example, a packet over SONET conversion algorithm. The output of framer 312 is applied to a layer 3 packet forwarding engine 320, which may be a PathStar IP switch that is part of packet access network 120 in Fig. 1.

In the reverse or upstream direction, IP packets received from forwarding engine 320 in packet framer 312 are converted from IP format to packet over SONET format, and applied to the transmitter portion of optical transceiver 310 to modulate a laser having a nominal wavelength λₖ associated with a particular C-WDM channel. The output of transceiver 310 is applied via upstream connection 313 to the insertion filter 210-2 of the OADM, and thus combined with the signals being transmitted out of the node on ring 101.

A similar arrangement is used in OADM 210' which is a part of ring 102, where information packets are carried in the counterclockwise (right to left in Fig. 3) direction. As noted previously, the dual ring arrangement illustrated in Figs. 1 and 3 allows ring capacity expansion and protection in the case of a ring fault. Here, the OADM 210' includes an extraction (drop) filter 210'-4 and an insertion (add) filter 210'-3. The output of extraction filter 210'-4 is coupled via downstream connection 316 to the receiver portion of optical transceiver 315. The packets output from transceiver 315 are converted to IP format in packet framer 317 and applied to IP forwarding engine 320. With respect to the upstream direction, IP packets from forwarding engine 320 are converted to SONET protocol in packet framer 317, and applied to the transmitter portion of optical transceiver 315. The output of transceiver 315 is coupled via upstream connection 318 to insertion filter 210'-3 of the OADM 210'.

As noted previously, nodes arranged in accordance with the present invention can be physically contained within an electronic cabinet that houses the add/drop node electronics, e.g. transceivers, packet framers, and the layer 3 forwarding engines. However, as described in a copending application entitled "Optical Ring Network Having Enhanced Security and Reduced Loss" identified above, the broadband filters, which are passive, may advantageously be located at a remote site, such as a fiber duct that is several kilometers away from the add/drop node electronics. Remote location has the advantages of: (a) reducing C-WDM channel loss experienced in cabling optical fibers through patch panels at add/drop nodes, and (b) enhancing ring security and reliability, since, in this type of configuration, only traffic relevant to the pertinent add/drop node is accessible.

While Fig. 3 denotes the C-WDM channel coupling transceivers 310 and 315 to OADM 210 and 210' as having wavelength λₖ, it is to be understood that the wavelength of the BBF's in OADM 210 can be different from the wavelength of the BBF's in OADM 210'. Indeed, it is possible that ring 101 can have C-WDM channels with wavelengths that are partially or totally different from the wavelengths of the channels on ring 102.

In accordance with an aspect of the present invention, transceivers 310 and 315 of Fig. 3 can include multiple conventional temperature controlled lasers and appropriate filters so that a C-WDM channel having nominal center wavelength λₖ that encompasses wavelengths of, for example, λₖ +/-7 nm, can be populated with a plurality of dense wavelength division multiplexed (D-WDM) channels. In this manner, the capacity of traffic that can be handled at each node can be easily upgraded by (a) adding the D-WDM channels at the node, and (b) making corresponding changes in the hub, all without the need to make changes in any other node or otherwise disrupt service already active on the ring. The architecture of the present invention is thus such that a "pay as you grow" approach can be used, wherein capacity may be upgraded (added) on a node-by-node basis while the system remains in service.

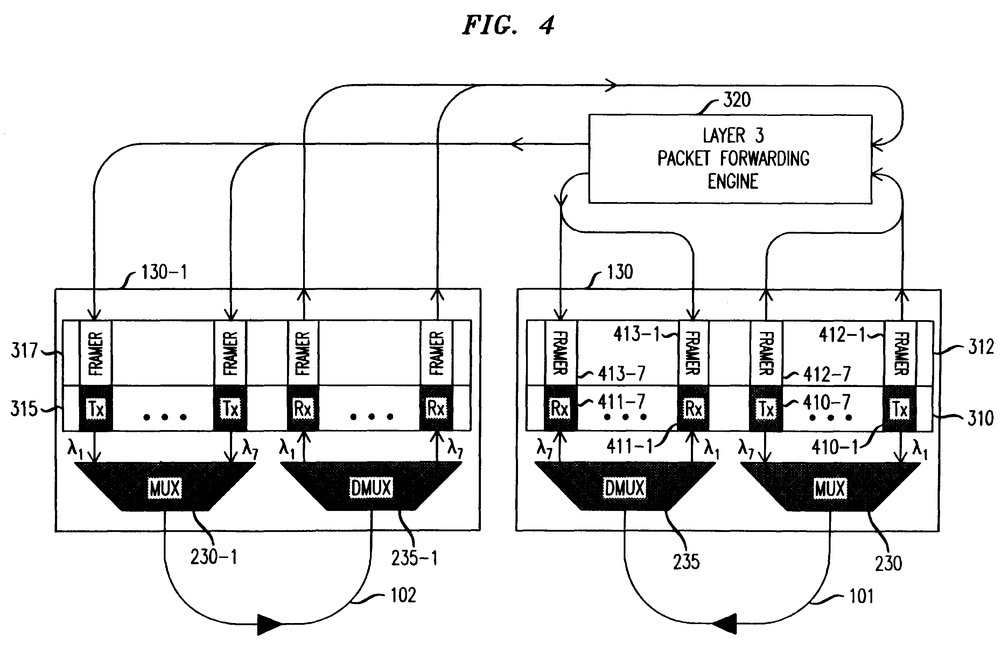

Referring now to Fig. 4, there is shown a block diagram of the detailed arrangement of hub 130 of Figs. 1 and 2, which is located on the clockwise ring 101, and a corresponding hub 130-1 located on the counter-clockwise ring 102. In hub 130, IP packets are applied to ring 101 via multiplexer 230, and extracted from ring 101 via demultiplexer 235. The individual inputs to multiplexer 230 are obtained from the transmitter portions 410-1 through 410-7 of a plurality of transceivers 310, while the individual outputs from demultiplexer 235 are coupled to the receiver portions 411-1 through 411-7 of transceivers 310. Both the individual transmitter portions 410-1 through 410-7 and receiver portions 411-1 through 411-7 of the transceivers have corresponding packet framers 412-1 through 412-7 and 413-1 through 413-7 in packet framer 312, where IP to SONET conversion (and vice-versa) occurs. As in Fig. 3, the framer inputs/outputs are coupled to a Layer 3 packet IP forwarding engine 320.

Still referring to Fig. 4, similar arrangement to that just described is present in a hub 130-1 that is connected to the second, counter-clockwise ring 102. Plural individual transmitter and receiver portions are available in a plurality of transceivers 315, corresponding to the C-WDM channels at wavelengths λ₁ to λ₇. Packet framers 317 are coupled to the transceivers.

Most commonly, endpoints at each of the nodes communicate with endpoints that are attached to other rings, with these inter-ring connections being enabled by the hub. For example, a particular endpoint on dual-rings 101, 102 of Fig. 1, such as packet access network 120, may communicate with a remote endpoint in the packet backbone network 140 connected to hub 130; the remote endpoint is on another ring not shown in Fig. 1. However, in addition to this inter-ring connectivity, there are cases in which a significant degree of intra-ring connectivity is required between endpoints connected to a subset of add/drop nodes on the original ring. In the arrangements thus far described, these intra-ring connections would be handled in a manner very similar to the inter-ring connections. A particular C-WDM channel, defined by the transceivers and the OADM's within the node to which the originating endpoint is connected, is used to send information from the endpoint to the hub. At the hub, this optical C-WDM signal is received and processed electronically by the layer 3 routing engine. The information is then remodulated onto the appropriate optical wavelength for delivery to the destination intra-ring or inter-ring node. When a high degree of intra-ring connectivity is required between endpoints connected to a given pair of add/drop nodes, it would be desirable to provide a direct optical connection, eliminating optical to electrical to optical conversion in the hub, and reducing the layer 3 processing load.

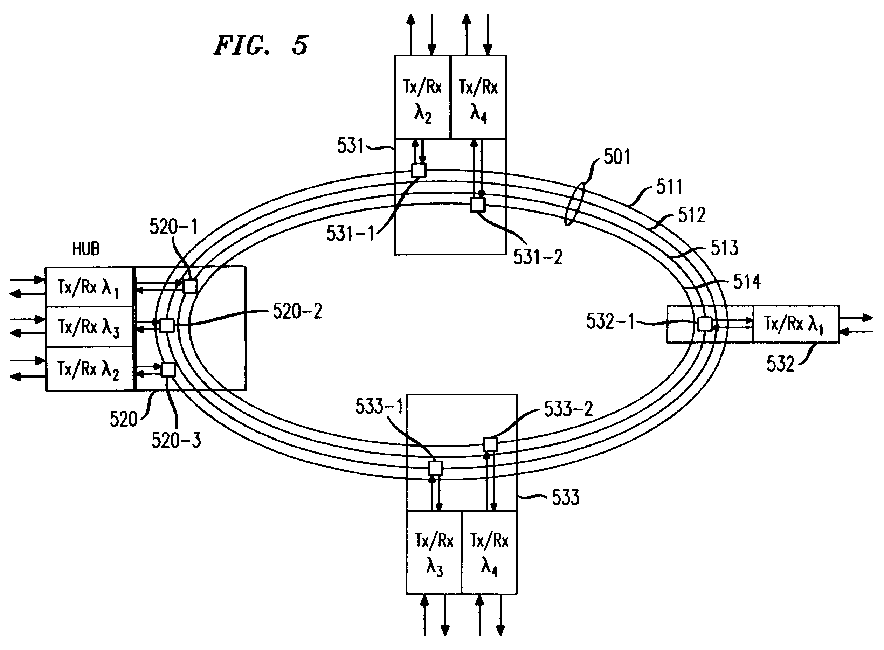

In order to enable a direct optical intra-ring connection, the arrangement of Fig. 5 may be used instead. In Fig. 5, an optical communication medium is shown generally as 501. For the purposes of illustration, medium 501 is shown as having four separate C-WDM channels 511-514, with unidirectional packet transmission in the clockwise direction. It is to be understood that physically, first and second individual fiber loops would be used to establish the channels illustrated, as well as other channels, if desired, for bi-directional operation. In Fig. 5, node 531 is arranged with two sets of OADM's 531-1 and 531-2 that enable transmission and reception of optical signals at wavelengths λ₂ and λ_{4,} respectively. Similarly, node 533 is arranged with two sets of OADM's 533-1 and 533-2 that enable transmission and reception of optical signals at wavelengths λ₃ and λ₄, respectively. Finally, node 532 is arranged with an OADM 532-1 that enables transmission and reception of optical signals at wavelengths λ₁.

Hub 520 in Fig. 5 is arranged with three sets of OADM's 520-1, 520-2 and 520-3 that enable transmission and reception of optical signals at wavelengths λ₁, λ₂ and λ₃. Note, however, that C-WDM channel at wavelength λ₄ remains in the optical domain as it passes through node 520, and signals are not extracted or inserted at that node in that channel.

With the arrangement of Fig. 5, there is a connection between each remote node 531-533 and hub 520 on a dedicated wavelength. Specifically, nodes 531, 532, and 533, are connected to hub 520 on wavelengths λ₂, λ₁ and λ₃, respectively. If node 532 wishes to send data to node 531, an optical/electrical/optical (O/E/O) conversion will be required in the hub. In this example, node 532 will send data to hub 520 on the λ₁ wavelength. The hub receives this optical signal and generates the corresponding electrical signal, which gets modulated onto the λ₂ wavelength. The optical signal on the λ₂ wavelength gets dropped at node 531. In contrast, node 533 may advantageously send data to node 531 directly, without any O/E/O conversion in hub 520. This is realized by doing optical pass through of the λ₄ wavelength in the hub. This means that the λ₄ wavelength is not added or dropped by an OADM at hub 520, but rather that signals at this wavelength are simply passed through the hub optically.

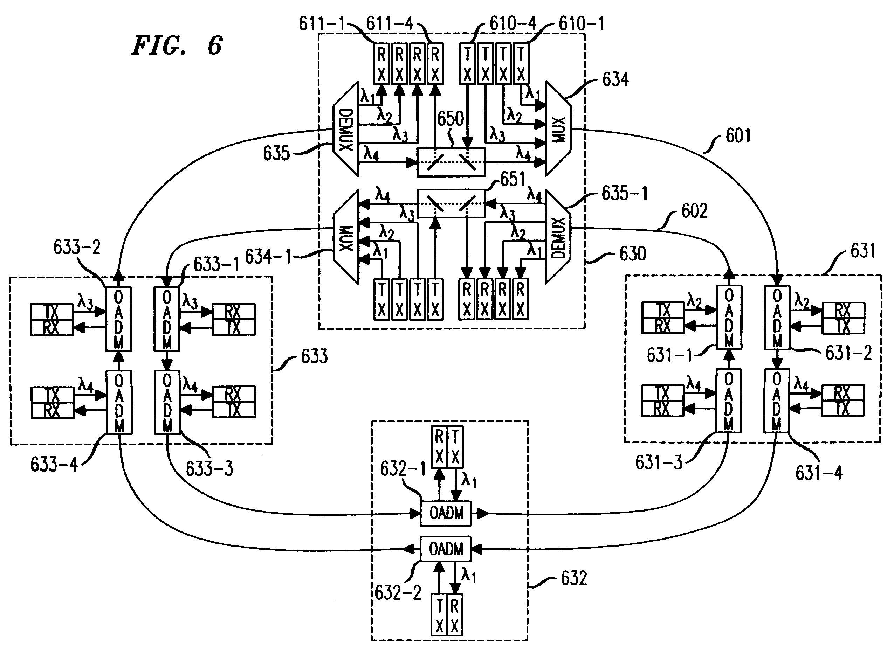

Fig. 6 illustrates an arrangement (similar to that shown in Fig. 5) for improving bandwidth utilization by using MEMS switches or similar devices in hub 630. This arrangement, like that of Fig. 5, is applicable to cases in which some degree of direct connectivity is required between a subset of nodes on the ring.

In Fig. 6, clockwise and counterclockwise optical rings 601 and 602, respectively, interconnect nodes 631-633 with hub 630. OADM's 631-1 and 631-2 in node 631 include BBF's arranged to add and drop C-WDM channels at wavelength λ₂, while OADM's 631-3 and 631-4 in node 631 include BBF's arranged to add and drop C-WDM channels at wavelength λ₄. OADM's 633-1 and 633-2 in node 633 include BBF's arranged to add and drop C-WDM channels at wavelength λ₃, while OADM's 633-3 and 633-4 in node 633 include BBF's arranged to add and drop C-WDM channels at wavelength λ₄. Finally, OADM's 632-1 and 632-2 in node 632 include BBF's arranged to add and drop one C-WDM channel at wavelength λ₁. In hub 630, demultiplexer 635 receives the WDM signal on ring 601, separates the combined signal into 4 separate output streams representing C-WDM wavelengths λ₁ to λ₄, and applies three of the output streams at wavelengths λ₁ to λ₃ to a plurality of receivers 611-1 to 611-3, respectively. The fourth output stream, at wavelength λ₄, is applied to a first MEMS switch 650, which has the ability to either (a) apply the output stream to receiver 611-4, or (b) to pass the output stream directly through node 630 to multiplexer 634. When MEMS switch 650 is switched so that fourth output stream, at wavelength λ₄, is coupled to receiver 611-4, it is concurrently arranged so that an input stream at wavelength λ₄ received from transmitter 610-4 is coupled to multiplexer 634. Multiplexer 634 also receives 3 separate output streams representing C-WDM wavelengths λ₁ to λ₃, from transmitters 610-1 to 610-3, and combines these with the stream at wavelength λ₄ for application to ring 601.

A similar arrangement is provided with respect to ring 602, so that a second MEMS switch 651 can either pass wavelength λ₄ either directly from demultiplexer 635-1 to multiplexer 634-1, or alternatively direct signals with that wavelength to/from a transmitter/receiver in the node.

The advantages of the arrangement of Fig. 6 over that of Fig. 5 will be recognized by considering that in the Fig. 5 arrangement, where it is desired to establish a direct connection between nodes 533 and 531 on the λ₄ wavelength, signals at that wavelength must be passed through hub 520 with no electrical conversion. To do this, the arrangement of Fig. 6 contemplates that the λ₄ port of demux 635 be plugged directly into the λ₄ port of mux 634, providing permanent, nailed-up bandwidth on this node 633-node 631 link. However, this direct intra-ring connection may not be in use 24 hours a day. During the off hours, it would be desirable to reconfigure hub 630 such that the λ₄ wavelength may be used for inter-ring connections with node 631 and/or node 633, thereby taking greater advantage of the installed transceiver and add/drop components. This reconfiguration is accomplished through the use of MEMS switches 650 and 651, which in essence switch between a direct, pass through connection and a configuration where the wavelength is applied to standard transceivers.

Note here that while the previous description included MEMS switch 650 only in a single C-WDM channel with wavelength λ₄, to keep hub 630 plug-in cards generic, MEMS switches could be used on all wavelengths. This may be an inexpensive way to get better wavelength utilization. Furthermore, it is to be noted that while MEMS switches are advantageous due to their small size, low power consumption, relatively low loss and low fabrication cost, certain other switching devices, such as motorized mechanical switches or LiNbO3 Mach Zender switches may provide the same or a similar capability:

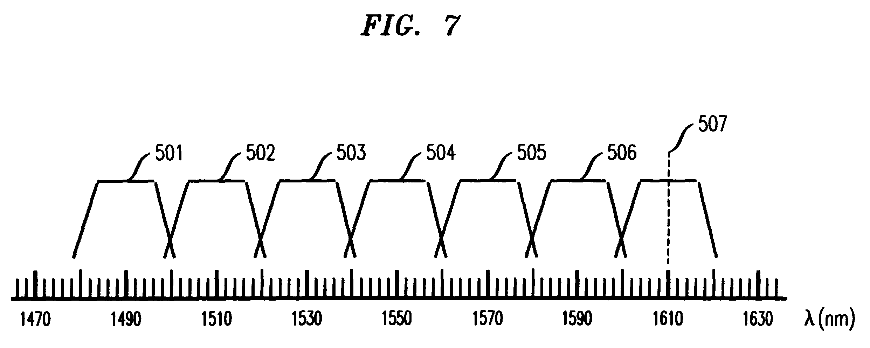

Fig. 7 illustrates graphically one possible arrangement for the C-WDM channels contemplated by the present invention. Seven channels 501-507 are shown, having nominal center wavelengths of 1490, 1510, 1530, 1550, 1570, 1590 and 1610 nm. The wide channel spacing of 20nm shown in Fig. 7 advantageously enables the use of very low cost transceivers with lasers that require little or no temperature control. In addition, broadband filters, for example, such as those that are realized using the TFF approach described above, easily accommodate wavelength drift that occurs with temperature variations of uncooled lasers. With the approach illustrated, the filter passband, approximately 13nm in width, can be populated with multiple D-WDM channels, illustratively, this passband can easily accommodate 16 D-WDM channels having 100GHz spacing. This allows for capacity upgrades at each node, by the addition of additional D-WDM channels.

Persons skilled in the art will appreciate that various modifications and adaptations can be made to the present invention. For example, while the preceding description of an embodiment of the present invention relates to an Internet Protocol (IP) network carrying IP packets, it is to be understood that the present invention can be used in connection with many diverse types of networks and with the transmission of different types of information bearing packets or signals. Thus, as used herein, the term "packets" includes, but is not limited to, data packets (such as are used in asynchronous transfer mode (ATM), synchronous transfer mode (STM), and/or internet protocol (IP) networks), as well as other information bearing signals, sometimes referred to as "frames", that are found, for example, in streaming audio and/or video applications.

## Claims

1. A wideband optical packet network system, comprising
at least one optical fiber transmission ring arranged to interconnect a series of nodes with a hub, and
broadband filters (BBF's) at each node arranged to extract information from, and insert information into, one or more widely spaced coarse WDM channels on said ring.

2. The invention defined in claim 1 wherein said system further includes a second optical fiber transmission ring interconnecting said nodes, and wherein said second ring carries packets between said nodes in a direction opposite to which packets are carried by said first ring.

3. The invention defined in claim 1 wherein each of said nodes is interconnected to a packet forwarding engine via an optical transceiver and a packet framer.

4. The invention defined in claim 1 wherein said hub is arranged to connect said system to a managed packet backbone network.

5. The invention defined in claim 1 wherein the nominal center wavelengths of adjacent ones of said WDM channels are spaced apart by approximately 20nm.

6. The invention defined in claim 1 wherein said coarse WDM channels are established on said ring by use of lasers operated without temperature control.

7. The invention defined in claim 1 wherein said BBF is a thin film dielectric filter.

8. The invention defined in claim 1 wherein said BBF is a fused biconically tapered filter.

9. The invention defined in claim 1 wherein each of said nodes includes a transceiver having a laser operated without temperature control.

10. An optical packet communications system, comprising
an optical transmission medium,
a plurality of add/drop nodes disposed at various points in said medium,
means in said nodes for establishing a plurality of coarse wavelength division multiplexed channels on said medium,
a source of information packets, and
means including broadband filters (BBF's) at each node arranged to apply said information packets from said source to one of said channels on said medium.

11. The invention defined in claim 10 wherein said BBF's are dielectric broadband thin film filters (TFF's).

12. An optical packet communications system, comprising
an optical transmission medium,
a plurality of add/drop nodes disposed in said medium, and
means including broadband filters (BBF's) at each node for establishing a plurality of coarse wavelength division multiplexed (C-WDM) channels on said medium, wherein endpoints associated with a particular one of said nodes communicate with endpoints connected to said hub via a C-WDM channel having a corresponding particular wavelength.

13. The invention defined in claim 12 wherein said hub is arranged to (a) drop information from at least one of said C-WDM channels, and supply said dropped information to the receiver portion of a transceiver, and to concurrently add information to said at least one C-WDM channel, said information received from the transmitter portion of said transceiver, and (b) pass directly through said hub while remaining in the optical domain, information from at least a second one of said C-WDM channels.

14. The invention defined in claim 13 wherein said hub includes a switch arranged to control the passage of said information directly through said hub,

15. The invention defined in claim 14 wherein said switch is a micro-electro-mechanical switch.

16. The invention defined in claim 13 wherein said transceiver is arranged to provide a plurality of dense WDM channels within said at least one C-WDM channel.
